# DEMANDE DE BREVET EUROPEEN

(11) **EP 2 262 297 A2**
(43) Date de publication de la demande: **15.12.2010**
(21) Numéro de dépôt: 10161228.1
(22) Date de dépôt: 27.04.2010
(51) Int. Cl.: H04W 12/00, H04L 29/06

(54) **Système et procédé de détermination de la connexion d'un terminal mobile à une femto-cellule particulière**

(30) Priorité: 13.05.2009 FR 0902301
(71) Demandeur: Societé Française du Radiotéléphone, 75008 Paris (FR)
(72) Inventeur: Laune, Marthe, 78000, VERSAILLES (FR); Fattouch, Imad, 75013, PARIS (FR)
(74) Mandataire: Debay, Yves

(57) **Abrégé**

La présente invention concerne un système de détermination de la connexion d'un terminal mobile (1) à une femto-cellule (2) d'un réseau GSM ou UMTS, comprenant l'ensemble des installations nécessaires au fonctionnement du réseau dont une passerelle GSM/UMTS, la femto-cellule étant connectée à un réseau Internet par l'intermédiaire d'un boîtier (3), **caractérisé en ce que** le système comprend au moins :
- un dispositif de transmission (S1) de l'adresse IP (*Internet Protocol*) du boîtier de connexion de la femto-cellule au réseau Internet, à une installation (4) du coeur du réseau GSM ou UMTS,
- un dispositif de mémorisation de l'adresse IP au niveau d'une base de données de l'installation du coeur du réseau, l'adresse IP étant associée à une donnée d'identification d'une communication mettant en jeu la femto-cellule,
- un dispositif de récupération (S2) d'une adresse IP dans la base de données de l'installation du coeur du réseau à partir d'au moins un critère de sélection, associé à un dispositif de corrélation (S3) de l'adresse IP récupérée avec un code INSEE particulier enregistré dans une autre base de données (5) du système.

## Description

La présente invention se rapporte au domaine des systèmes de détermination de la connexion d'un terminal mobile à une femto-cellule et plus particulièrement au domaine des systèmes de détermination *a posteriori* de cette connexion.

Les femto-cellules peuvent être définies comme des cellules radioélectriques qui permettent notamment d'élargir la portée des systèmes d'accès numériques distribués dans un espace de dimensions limitées. Une femto-cellule est, comme son nom l'indique, une cellule radio avec une puissance inférieure à celle d'une antenne relais capable d'assurer la communication à faible puissance entre l'intérieur et une liaison extérieure pour, entre autres, les technologies 2G (seconde génération) et 3G (troisième génération) et relayer à l'intérieur de l'entreprise ou du domicile, les flux numériques du réseau fixe vers le mobile en supprimant la nécessité d'avoir des terminaux dédiés. A l'origine de la femto-cellule, la « femto-station » forme la base du réseau des communications cellulaires installées dans l'espace délimité qui crée par son fonctionnement cette petite cellule. Ces « femto-stations » sont connectables au réseau par une liaison filaire d'accès en ADSL (*Asymmetric Digital Subscriber Line*) ou une liaison à fibres optiques ou par un modem optique ou par un modem câble. Le réseau de communication comprend tout un ensemble d'équipements qui traitent l'information, la gèrent, la transportent, la stockent tout en permettant la connexion et l'intégration de tous ces équipement de façon cohérente. Une passerelle est utilisée pour gérer les équipements domestiques qui doivent interfonctionner en protocole IP (*Internet Protocol*) à un moment ou à un autre, soit par câblages adaptés ou par des liaisons radioélectriques internes à l'espace de fonctionnement de la femto-cellule.

C'est ainsi que les femto-cellules permettent également de former des points d'accès qui intègrent plusieurs technologies, imposant du même coup la miniaturisation, l'intégration et la convergence de média, fixe et mobile. Ces femto-cellules ont notamment pour objectif d'être utilisées comme points d'accès 2G et 3G intégrés dans un boîtier de fournisseur d'accès ADSL pour améliorer automatiquement la couverture des téléphones mobiles de troisième génération, permettant la bascule des communications utilisant un terminal mobile standard sur le réseau d'accès IP au lieu de passer sur les antennes des opérateurs. Les femto-cellules utilisent ainsi le haut débit pour fournir des services voix et données de la même manière qu'une station BTS *(Base Transceiver Station*) ou node B d'un macro-réseau en encapsulant le trafic de la téléphonie mobile sur un réseau Internet. L'utilisation de telles femto-cellules permet alors de s'affranchir d'antennes surpuissantes en quelques lieux au profit d'une multitude de « mini-antennes » qui sont éparpillées à travers l'ensemble d'une zone réalisant alors une amélioration du maillage du réseau et de leur capacité de débit.

Les réseaux cellulaires 2G et 3G réalisés par les maillages des BTS et des nodes B permettent une localisation des terminaux mobiles connectés à ces réseaux, grâce à l'utilisation d'un ou de plusieurs identifiants des cellules qui interviennent dans les communications. Selon le type de réseau, GSM ou UMTS, ces identifiants sont un identifiant de cellule (*Ce*// *Identity,* abrégé *Cell Id*) ou un code de zone de service (*Service Area Code,* abrégé *SAC*), et correspondent à une couverture géographique du réseau. En revanche, dans le cas des femto-cellules, celles-ci sont installées, voire déplacées, géographiquement par l'utilisateur final de la femto-cellule. De plus, la configuration des paramètres radio et des identifiants des cellules n'est pas opérée par le personnel de l'opérateur mais également par l'utilisateur final de la cellule. Ainsi, lorsque le réseau présente une couche cellulaire qui ne fait intervenir que des femto-cellules, une corrélation bijective entre un identifiant d'une femto-cellule unique et une localisation géographique n'est pas en mesure d'être programmée et enregistrée dans une installation du coeur du réseau. Par ailleurs, les installations d'un réseau macro ne sont en mesure de gérer qu'un nombre limité de cellules. En effet, une MSC (*Mobile Switching Center*) n'est à l'heure actuelle pas capable de gérer plus de 64000 cellules. Le nombre de femto-cellules étant susceptible d'atteindre un ordre de grandeur bien plus important que le nombre de cellules d'un réseau macro, les installations centrales actuelles des réseaux ne sont donc pas en mesure de géolocaliser la couverture assurée par l'ensemble d'un parc de femto-cellules.

Depuis quelques années, la législation impose aux opérateurs téléphoniques de conserver les données des communications effectuées et notamment les données qui permettent une identification des utilisateurs (appelant et appelés), des caractéristiques techniques des communications (notamment date, horaire, durée), des données relatives aux installations et équipements mis en jeu ainsi qu'au données et services complémentaires et à leurs fournisseurs. Cette conservation de données est généralement légiférée à titre préventif pour permettre à tout moment aux autorités judiciaires d'être en mesure d'opérer une réquisition judiciaire.

Cependant, à l'heure actuelle, les mécanismes de réquisition judiciaire qui se basent uniquement sur un identifiant coté réseau ne sont pas fiables à 100% et ne permettent pas une localisation parfaite et sans ambiguïté de l'endroit exact d'où un appel est passé, ni de définir parfaitement la femto-cellule impliquée dans une communication opérée depuis un terminal mobile.

La présente invention a pour objet de supprimer un ou plusieurs inconvénients de l'art antérieur en proposant notamment une solution qui permette une localisation parfaitement fiable de tout appel depuis un terminal mobile et impliquant une femto-cellule mais également un enregistrement des données de localisation de ces appels.

Cet objectif est atteint grâce à un système de détermination de la connexion d'un terminal mobile à une femto-cellule d'un réseau GSM ou UMTS, comprenant l'ensemble des installations nécessaires au fonctionnement du réseau dont une passerelle GSM/UMTS, la femto-cellule étant connectée à un réseau Internet par l'intermédiaire d'un boîtier, **caractérisé en ce que** le système comprend au moins :
- un dispositif de transmission de l'adresse IP (*Internet Protocol*) du boîtier de connexion au réseau Internet auquel la femto-cellule est reliée, à une installation du coeur du réseau GSM ou UMTS,
- un dispositif de mémorisation de l'adresse IP au niveau d'une base de données de l'installation du coeur du réseau, l'adresse IP étant associée à une donnée d'identification du terminal mobile en communication avec la femto-cellule,
- un dispositif de récupération d'une adresse IP dans la base de données de l'installation du coeur du réseau à partir d'au moins un critère de sélection, associé à un dispositif de corrélation de l'adresse IP récupérée avec une adresse particulière enregistrée dans une autre base de données du système.

Un autre objectif de l'invention est de proposer un procédé adapté pour la mise en oeuvre des systèmes de l'invention.

Cet objectif est atteint grâce à un procédé de détermination de la connexion d'un terminal mobile à une femto-cellule d'un réseau mettant en jeu un système selon au moins une des revendications précédentes, **caractérisé en ce que** le procédé comprend :
- une étape de transmission de l'adresse IP (*Internet Protocol*) du boîtier de connexion de la femto-cellule au réseau Internet, à une installation du coeur du réseau GSM ou UMTS,
- une étape de mémorisation de l'adresse IP au niveau d'une base de données de l'installation du coeur du réseau, en corrélation avec une association de l'adresse IP à une donnée d'identification d'une communication mettant en jeu la femto-cellule,
- une étape de recherche d'une adresse IP à partir d'au moins un critère de sélection,
- une étape de récupération d'une adresse IP dans la base de donnée de l'installation du coeur du réseau mobile,
- une étape de corrélation de l'adresse IP récupérée avec une adresse enregistrée dans une autre base de données d'une installation du coeur du réseau fournissant l'accès à Internet.

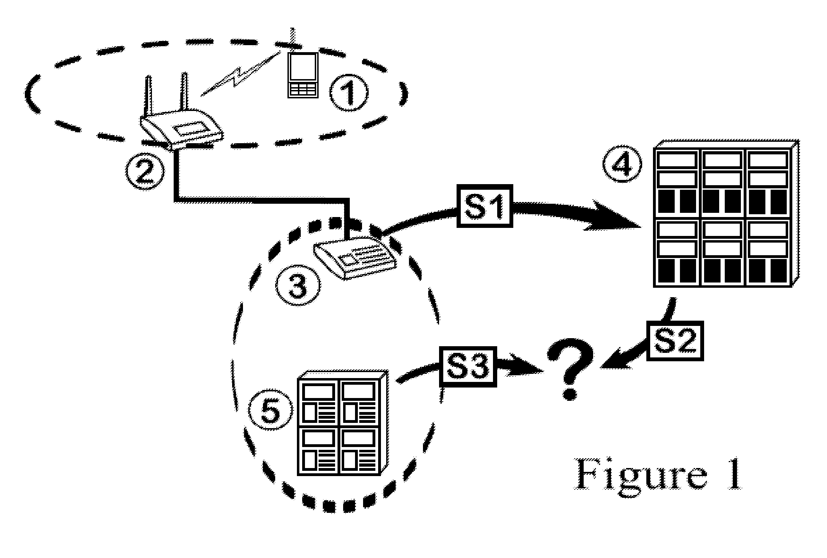

L'invention, avec ses caractéristiques et avantages, ressortira plus clairement à la lecture de la description faite en référence aux dessins annexés dans lesquels la figure 1 représente le schéma d'un exemple de différentes étapes d'une localisation d'un terminal mobile communiquant sous couverture d'une femto-cellule selon une variante de l'invention.

Dans le présent document, le système détaillé comprend notamment des femto-cellules qui permettent de relier des terminaux mobiles à un réseau GSM/UMTS en utilisant une connexion Internet et donc un réseau Internet. Il convient donc de remarquer que le présent système fait intervenir deux réseaux différents. Toutefois, sauf indications contraires, les éléments du système désignés sous le terme « installation du coeur du réseau » se rapportent à une installation du réseau GMS/UMTS et non pas Internet, le réseau Internet n'étant utilisé qu'entre chacune des femto-cellules et un dispositif passerelle qui assure la connexion à un réseau GSM/UMTS.

Le système de l'invention qui permet une détermination précise d'une connexion éventuelle d'un terminal mobile (1) à une femto-cellule (2) au cours d'une communication s'appuie sur l'utilisation de l'adresse IP (*Internet Protocol*) nécessaire à toute femto-cellule (2) pour sa connexion, via un dispositif passerelle, à un réseau GSM/UMTS.

La connexion d'une femto-cellule à un réseau Internet est opérée par l'intermédiaire d'un boîtier (3) de connexion couramment appelé par l'anglicisme Box, géré par un fournisseur d'accès (5) Internet. Ce boîtier de connexion se voit attribuer une adresse IP à chaque fois qu'il est démarré et/ou que sa connexion à Internet est établie. Cette adresse IP est également associée à un nom d'un abonné et à une adresse géographique connue par le fournisseur d'accès à Internet et liée à l'installation physique de l'accès à Internet lui-même. L'adresse IP est alors récupérée (S1) par un dispositif du système pour être transmise à une installation (4) du coeur du réseau. Cet élément (4) du coeur du réseau est formé par un serveur disposé entre la passerelle et un dispositif MSC (*Mobile service Switching Center*), au même niveau que des dispositifs analogues que sont les BSC (*Base Station Controller*) ou RNC (*Radio Network Controller*). Ce serveur intègre au moins une base de données dans laquelle les adresses IP attribuées à chacun des boîtiers (3) qui assurent la connexion Internet des femto-cellules (2) du réseau sont enregistrées.

La transmission de l'adresse IP à une installation du coeur du réseau est effectuée par un dispositif adapté lorsqu'un terminal mobile réalise une communication sous couverture de la femto-cellule. L'adresse IP est alors transmise à une installation du coeur du réseau avec une ou plusieurs autres données habituellement transmises lorsqu'un terminal mobile effectue ou établit une communication en étant sous couverture d'une femto-cellule. Cette adresse IP peut ainsi être transmise à l'installation du coeur du réseau concomitamment avec le transfert de données telles qu'un identifiant du terminal mobile (appelant ou appelé), et/ou un identifiant de l'utilisateur, par exemple une code IMSI (*International Mobile Subscriber Identity*), et/ou des données d'identification de la communication comme par exemple l'heure et la date de début de la communication, et/ou la durée de la communication. Il peut également arriver que le terminal mobile se déplace et établisse des connexions successives avec différentes cellules au cours d'une même communication. Dans ce cas, lorsque le terminal mobile établit une nouvelle communication en entrant dans la couverture d'une nouvelle femto-cellule, l'adresse IP du boîtier qui connecte la femto-cellule est récupérée pour être transmise à l'installation du coeur du réseau. La transmission de l'adresse IP est alors associée avec une ou plusieurs données de la communication comme par exemple, le jour et l'heure à laquelle la communication fait intervenir la femto-cellule et/ou la durée de l'intervention de la femto-cellule dans la communication.

La mémorisation des adresses IP dans la base de données de l'installation du coeur du réseau s'effectue en corrélation avec l'enregistrement d'autres données et notamment en les associant avec au moins une donnée propre à une communication faisant intervenir une femto-cellule connectée au boîtier désigné par l'adresse IP.

Selon une variante de l'invention, l'adresse IP du boîtier de connexion qui assure la connexion Internet à une femto-cellule est transmise dès le démarrage ou la mise en fonctionnement du boîtier. De même, à chaque redémarrage du boîtier, lorsque l'adresse IP est susceptible d'être modifiée, la nouvelle adresse IP est transmise à la base de donnée de l'installation du coeur du réseau. L'enregistrement de ces adresses IP de femto-cellules s'effectue alors en corrélation avec l'enregistrement de l'heure à partir de laquelle la femto-cellule a été démarrée et s'est vue attribuer une adresse IP.

Lorsqu'une localisation géographique d'un terminal qui effectue ou a effectué un appel est nécessaire, par exemple suite à une réquisition judiciaire, la base de données de l'installation du coeur du réseau est utilisée.

Pour chaque communication effectuée, une recherche peut être opérée par un dispositif de récupération à partir d'un ou plusieurs critères de sélection. Ces critères de sélection peuvent correspondre, par exemple, à une ou plusieurs des données de la communication enregistrées concomitamment à l'enregistrement de l'adresse IP lorsqu'un terminal mobile s'est connecté à une femto-cellule particulière. La recherche permet d'aboutir à la récupération (S2) d'au moins une adresse IP qui correspond au boîtier ayant permis la connexion d'une femto-cellule particulière impliquée dans la communication. Grâce à l'opérateur, fournisseur d'accès Internet, qui gère le boîtier (3) de connexion, une corrélation (S3) entre l'adresse IP du boîtier (3) et une adresse particulière est établie. Cette adresse particulière est celle de l'utilisateur, propriétaire du boîtier. L'adresse peut, par exemple, correspondre à un code INSEE. Cette corrélation fait ainsi intervenir des bases de données (5), généralement propres à chaque opérateur ou fournisseur d'accès Internet.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Système de détermination de la connexion d'un terminal mobile (1) à une femto-cellule (2) d'un réseau GSM ou UMTS, comprenant l'ensemble des installations nécessaires au fonctionnement du réseau dont une passerelle GSM/UMTS, la femto-cellule étant connectée à un réseau Internet par l'intermédiaire d'un boîtier (3), **caractérisé en ce que** le système comprend au moins :
- un dispositif de transmission (S1) de l'adresse IP (*Internet Protocol*) du boîtier de connexion au réseau Internet auquel la femto-cellule est reliée, à une installation (4) du coeur du réseau GSM ou UMTS,
- un dispositif de mémorisation de l'adresse IP au niveau d'une base de données de l'installation du coeur du réseau, l'adresse IP étant associée à une donnée d'identification du terminal mobile en communication avec la femto-cellule,
- un dispositif de récupération (S2) d'une adresse IP dans la base de données de l'installation du coeur du réseau à partir d'au moins un critère de sélection, associé à un dispositif de corrélation (S3) de l'adresse IP récupérée avec une adresse particulière enregistrée dans une autre base de données (5) du système,
le dispositif de transmission de l'adresse IP étant arrangé pour opérer le transfert de l'adresse IP avec au moins une des informations transmises lors d'une communication opérée par un terminal mobile sous couverture de la femto-cellule.

2. Système de détermination de la connexion d'un terminal mobile à une femto-cellule d'un réseau selon une des revendications précédentes, **caractérisé en ce que** le dispositif de transmission de l'adresse IP est arrangé pour opérer le transfert de l'adresse IP du boîtier de connexion lors de l'établissement d'une connexion d'un terminal mobile à une femto-cellule.

3. Système de détermination de la connexion d'un terminal mobile à une femto-cellule d'un réseau selon la revendication précédente, **caractérisé en ce que** le système comprend également un dispositif de récupération et de transmission de l'adresse IP de la femto-cellule connectée au boîtier Internet et qui participe à la couverture du terminal mobile qui établit une communication.

4. Système de détermination de la connexion d'un terminal mobile à une femto-cellule d'un réseau selon une des revendications précédentes, **caractérisé en ce que** la mémorisation et l'intégration d'au moins une adresse IP dans une base de données est opérée en corrélation avec au moins une donnée d'identification d'une communication du terminal mobile.

5. Système de détermination de la connexion d'un terminal mobile à une femto-cellule d'un réseau selon une des revendications précédentes, **caractérisé en ce que** le dispositif de mémorisation enregistre conjointement à l'adresse IP du boîtier de connexion à Internet, au moins un élément d'une liste comprenant :
- un identifiant de l'utilisateur du terminal mobile qui effectue l'appel, et/ou
- l'heure où la communication a débuté, et/ou
- la durée de la communication, et/ou
- un identifiant de l'utilisateur du terminal mobile appelé.

6. Système de détermination de la connexion d'un terminal mobile à une femto-cellule d'un réseau selon la revendication 1, **caractérisé en ce que** le dispositif de transmission de l'adresse IP (*Internet Protocol*) du boîtier de connexion de la femto-cellule au réseau Internet opère soit à la connexion soit au démarrage de la femto-cellule et **en ce que** le dispositif de mémorisation de l'adresse IP au niveau d'une base de données de l'installation du coeur du réseau, enregistre l'adresse IP en association avec une donnée d'identification d'une communication mettant en jeu la femto-cellule.

7. Procédé de détermination de la connexion d'un terminal mobile à une femto-cellule d'un réseau mettant en jeu un système selon au moins une des revendications précédentes, **caractérisé en ce que** le procédé comprend :
- une étape de transmission (S1) de l'adresse IP (*Internet Protocol*) du boîtier de connexion de la femto-cellule au réseau Internet, à une installation du coeur du réseau GSM ou UMTS,
- une étape de mémorisation de l'adresse IP au niveau d'une base de données de l'installation du coeur du réseau, en corrélation avec une association de l'adresse IP à une donnée d'identification d'une communication mettant en jeu la femto-cellule,
- une étape de recherche d'une adresse IP à partir d'au moins un critère de sélection,
- une étape de récupération (S2) d'une adresse IP dans la base de données de l'installation du coeur du réseau,
- une étape de corrélation (S3) de l'adresse IP récupérée avec un code INSEE particulier enregistré dans une base de données d'une installation du coeur du réseau,
l'étape de transmission de l'adresse IP s'opérant concomitamment avec le transfert d'au moins une des informations transmises lors d'une communication effectuée par un terminal mobile sous couverture de la femto-cellule.

8. Procédé de détermination de la connexion d'un terminal mobile à une femto-cellule d'un réseau selon la revendication 7, **caractérisé en ce que** l'étape de transmission de l'adresse IP opère le transfert de l'adresse IP du boîtier de connexion lors de l'établissement d'une connexion d'un terminal mobile à une femto-cellule.
